# FASCICULE DE BREVET EUROPEEN

(11) **EP 2 851 689 B1**
(45) Date de publication et mention de la délivrance du brevet: **22.06.2016**
(21) Numéro de dépôt: 14185489.3
(22) Date de dépôt: 19.09.2014
(51) Int. Cl.: G01P 13/02

(54) **Sonde de mesure aerodynamique a evacuation de liquide d'infiltration par gravite**
Aerodynamische Messsonde mit Ausscheidung von Infiltrationsflüssigkeit mit Hilfe der Schwerkraft
Aerodynamic measurement probe with evacuation of penetrated liquid by gravity

(30) Priorité: 20.09.2013 FR 1302188
(43) Date de publication de la demande: 25.03.2015
(73) Titulaire: Thales, 92200 Neuilly Sur Seine (FR)
(72) Inventeur: Bigand, Jean-Louis, 41102 VENDÔME (FR)
(74) Mandataire: Collet, Alain

(56) Documents cités:
- FR-A- 1 600 479
- FR-A1- 2 829 824
- US-A- 3 514 997

## Description

La présente invention concerne le domaine des sondes de mesure aérodynamique et notamment les sondes d'incidences et les sondes de dérapage. Plus précisément, elle porte sur une sonde de mesure aérodynamique comprenant un dispositif à évacuation de liquide d'infiltration par gravité.

Selon une technique connue, les sondes de mesure aérodynamique comprennent une pièce mobile en rotation destinée à s'orienter dans l'axe du flux d'air entourant l'aéronef sur lequel le support est installé. La mesure de l'incidence locale d'un flux d'air contre le fuselage d'un aéronef est un paramètre essentiel à son pilotage. Elle permet de définir la direction du vecteur vitesse de l'aéronef par rapport à l'air ambiant qui l'entoure.

L'utilisation d'une palette mobile pose le problème de l'étanchéité de la palette par rapport à son support encastré dans le fuselage de l'aéronef. Il est nécessaire de prévoir des moyens pour empêcher ou limiter les infiltrations de liquide dans le mécanisme de la sonde. Diverses solutions de roulements étanches, à frottements secs ou à frottements visqueux, ont été envisagées pour résoudre cette difficulté. Ces solutions présentent des performances variables en étanchéité et peuvent être dimensionnées en fonction des besoins de l'aéronef. Les frottements secs ou visqueux entre l'axe et le support génèrent toutefois un couple qui s'oppose à la rotation de la palette. Pour répondre aux exigences les plus élevées en termes de précision et de temps de réponse des sondes aérodynamiques, il est envisagé la mise en oeuvre d'axes tournants sans frottement par rapport au support. Pour permettre une rotation libre de l'axe, l'axe tournant est relié au support par un ensemble de paliers de guidage en rotation, sans joints ou autres moyens d'étanchéité en contact avec l'axe. On admet donc que du liquide puisse s'infiltrer à l'interface entre l'axe et le support, au travers du jeu fonctionnel nécessaire à la rotation. On parle alors de dispositif respirant, capable de s'accommoder par conception d'une certaine quantité de liquide infiltré ou de la présence d'humidité.

Pour ces dispositifs à axe tournant sans frottement, on cherche néanmoins à limiter la quantité de liquide d'infiltration. Une trop grande quantité de liquide stagnant dans le mécanisme est susceptible de générer par corrosion une usure prématurée du mécanisme. Une solution connue est la mise en oeuvre de protections mécaniques pour s'opposer aux infiltrations directes de liquide le long de l'axe.

Par exemple, le document US 3,514,997 décrit une sonde possédant une chicane permettant de limiter l'infiltration de liquides.

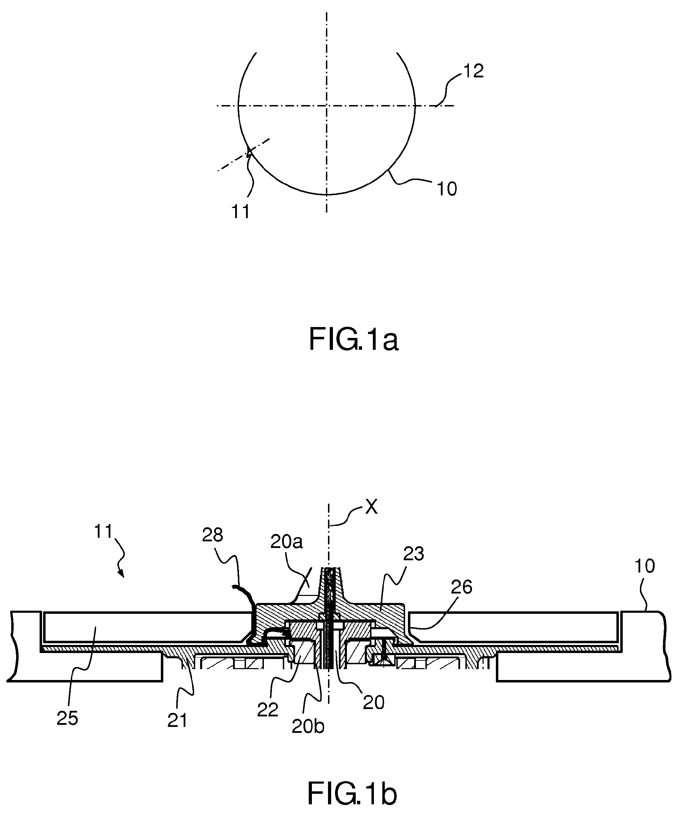

Une sonde aérodynamique peut être installée à différents endroits du fuselage de l'aéronef. Pour mesurer le dérapage de l'aéronef, on est amené à placer la sonde à proximité de l'axe vertical de l'aéronef. Pour mesurer l'incidence, on est amené à placer la sonde à proximité de l'axe horizontal. La figure 1a décrit l'implantation d'une sonde 11 sur le fuselage 10 d'un aéronef représenté en coupe transversale. Dans cet exemple, la sonde est fixée sur l'hémisphère inférieur du fuselage, ou autrement dit sous l'axe horizontal 12, à proximité de cet axe. Comme représenté sur la figure 1b dans une vue en coupe, la sonde 11 comprend un arbre 20 mobile en rotation dans un support 21 selon un axe longitudinal référencé X, et au moyen d'un ensemble de paliers 22. L'arbre 20 comprend un disque 23 séparant entre une partie extérieure 20a de l'arbre, située à l'extérieur du fuselage, et une partie intérieure 20b de l'arbre, située à l'intérieur du fuselage. Le support 21 comprend un capot 25 muni d'une ouverture circulaire 26 traversée par l'arbre 20. Le disque 23 et le capot 25 disposés en regard l'un de l'autre au niveau de l'ouverture circulaire 26 limitent les infiltrations de liquide de l'extérieur de l'aéronef vers la partie intérieure de la sonde. Pour une sonde installée sous le fuselage de l'aéronef, comme représentée en figure 1a, du liquide infiltré peut être évacué au travers de l'ouverture circulaire par effet de la gravité.

Dans le cas de projection de liquide directement dirigée vers l'arbre, des infiltrations de quantité importante de liquide peuvent avoir lieu, selon le chemin d'infiltration 28 représenté en trait plein. On connait par exemple la norme aéronautique DO160 qui spécifie des conditions sévères d'une projection de liquide sous pression directement sur l'axe de la sonde. Typiquement, la sonde est exposée à un jet sous pression de 60000 Pa généré par une buse de sortie d'un diamètre de 6.35 mm. Pour faire face aux exigences les plus récentes de l'aéronautique, il est donc désirable d'améliorer l'efficacité de l'évacuation de liquide d'infiltration par gravité des sondes à axe tournant sans frottement.

Un but de l'invention est notamment de pallier tout ou partie des inconvénients précités. A cet effet, l'invention a pour objet une sonde de mesure aérodynamique destinée à mesurer une incidence locale de flux d'air circulant le long du fuselage d'un aéronef, comprenant un support et un arbre mobile en rotation selon un axe longitudinal par rapport au support. Le support et l'arbre sont configurés pour former entre eux plusieurs chicanes successives autour de l'axe longitudinal. Chaque chicane permet de transporter du liquide infiltré dans la chicane :
- selon un premier chemin, par effet de la gravité, vers un circuit d'évacuation associé à la chicane et aménagé dans le support, et
- selon un second chemin, et contre l'effet de la gravité, vers une chicane successive ou vers l'arbre.
Le circuit d'évacuation de chacune des chicanes permet d'évacuer du liquide hors du support par effet de la gravité en s'éloignant de l'arbre.

Avantageusement, le support comprend une chambre de captation, associée à une chicane, vers laquelle du liquide infiltré dans la chicane est entrainé par effet de la gravité ; le circuit d'évacuation associé à la chicane communiquant avec au moins un point bas de la chambre de captation.

Avantageusement, la chambre de captation associée à une chicane est constituée d'une rainure circulaire ouverte sur la chicane et communique avec le circuit d'évacuation associé à la chicane en un point bas de la chambre de captation.

Avantageusement, la chambre de captation associée à une chicane est constituée d'une rainure ouverte sur la chicane le long d'une portion d'arc de cercle ; chaque extrémité de la portion d'arc de cercle formant un point bas de la chambre de captation et communiquant avec le circuit d'évacuation associé à la chicane.

Avantageusement, le circuit d'évacuation associée à une chicane comprend au moins une cavité de détente, reliée à la chicane par un conduit d'évacuation, et comprenant un ou plusieurs orifices de sortie aptes à transporter par effet de la gravité du liquide accumulé dans la cavité de détente vers une cavité de détente associée à une chicane précédente ou hors du support.

Dans un mode de réalisation de l'invention, la sonde comprend au moins deux chicanes successives :
- une première chicane à laquelle sont associées une chambre de captation circulaire ouverte sur la première chicane, et un circuit d'évacuation comprenant une cavité de détente reliée à la chambre de captation circulaire par un conduit d'évacuation radial,
- et au moins une seconde chicane successive à laquelle sont associées une chambre de captation ouverte sur la seconde chicane le long d'une portion d'arc de cercle, et un circuit d'évacuation comprenant deux cavités de détente reliées chacune à une extrémité de la portion d'arc de cercle par un conduit d'évacuation radial ;
la cavité de détente associée à la première chicane comprenant plusieurs orifices de sortie aptes à transporter du liquide accumulé hors du support ; les cavités de détente associées à l'au moins une seconde chicane comprenant chacune un orifice de sortie apte à transporter du liquide accumulé vers la cavité de détente associée à la première chicane.

Dans un mode de réalisation particulier de l'invention, la sonde comprend trois chicanes successives : une première chicane et deux secondes chicanes ayant respectivement les caractéristiques précédemment décrites.

Avantageusement, la cavité de détente et les orifices de sortie associés à la première chicane sont configurés de manière à ce que du liquide infiltré au travers d'un premier orifice de sortie est évacué préférentiellement par un second orifice de sortie, limitant les remontées de liquide vers la chicane.

Avantageusement, la sonde comprend au moins une chicane dont la plus petite dimension de la section de passage minimale du premier chemin est supérieure à la plus petite dimension de la section de passage minimale du second chemin.

Avantageusement, la sonde comprend au moins une chicane dont la plus petite dimension de la section de passage minimale du premier chemin est suffisamment grande pour permettre le transport de gouttes d'eau.

Avantageusement, la sonde comprend au moins une chicane dont la plus petite dimension de la section de passage minimale du premier chemin est supérieure à 3 mm.

Avantageusement, la sonde comprend au moins une chicane dont la plus petite dimension de la section de passage minimale du second chemin est suffisamment petite pour empêcher le transport de gouttes d'eau et limiter le passage de liquide sous pression.

Avantageusement, la sonde comprend au moins une chicane dont la plus petite dimension de la section de passage minimale du second chemin est inférieure à 3 mm.

Enfin, l'invention porte aussi sur un procédé de fabrication d'une sonde selon l'une des revendications précédentes, caractérisé en ce qu'il comprend une étape de fabrication additive simultanée d'une partie du support et d'une partie de l'arbre formant ensemble les chicanes successives.

L'invention sera mieux comprise et d'autres avantages apparaîtront à la lecture de la description détaillée d'un mode de réalisation donné à titre d'exemple sur les figures suivantes.
- les figures 1a et 1b, déjà présentées, illustrent le principe d'une sonde à axe tournant sans frottement à évacuation de liquide d'infiltration par gravité, sonde évaluée en interne par le demandeur,
- les figures 2a et 2b représentent par deux vues en coupe une sonde de mesure aérodynamique selon un mode de réalisation de l'invention,
- la figure 3 représente en perspective un arbre mobile de sonde de mesure aérodynamique selon le mode de réalisation de l'invention
- les figures 4a, 4b et 4c représentent selon plusieurs vues, en coupe et en perspective, un capot de sonde de mesure aérodynamique selon le mode de réalisation de l'invention.

Par souci de clarté, les mêmes éléments portent les mêmes repères dans les différentes figures.

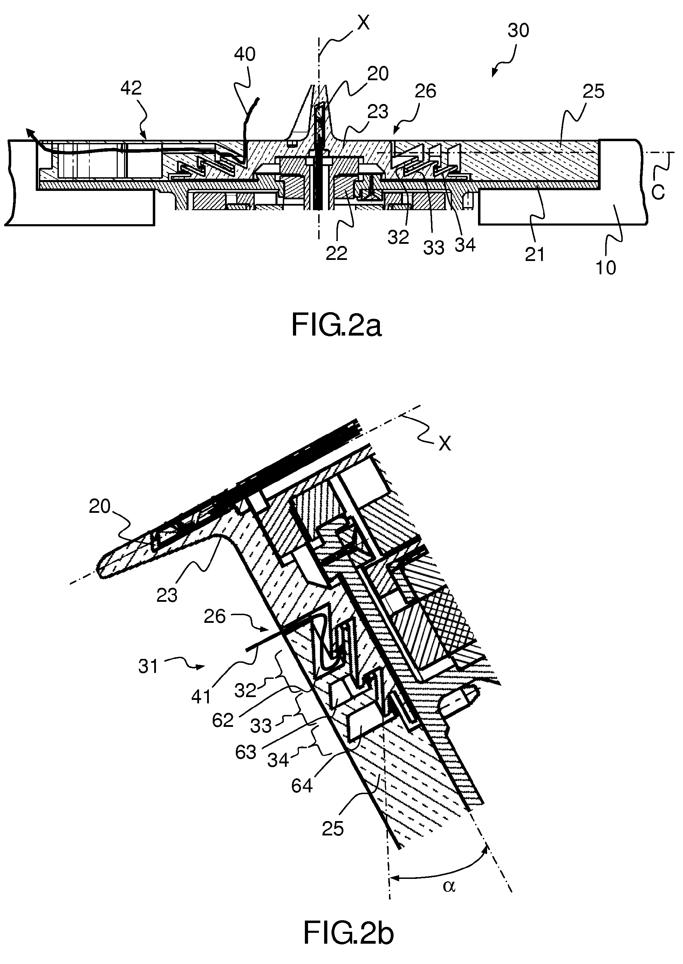

Les figures 2a et 2b, représentent une sonde de mesure aérodynamique selon un mode de réalisation privilégié de l'invention. La sonde 30 comprend plusieurs éléments communs avec la sonde 11 précédemment décrite qui ne sont pas systématiquement repris en détail. La sonde 30 comprend en particulier un arbre 20 mobile en rotation selon un axe longitudinal référencé X, dans un support 21 fixé au fuselage de l'aéronef, et au moyen d'un ensemble de paliers 22. L'arbre 20 comprend un disque 23 disposé en regard d'une ouverture circulaire 26 du capot 25 solidaire du support 21.

Dans le mode de réalisation représenté sur les figures 2a et 2b, la sonde est destinée à être installée sur le fuselage d'un aéronef selon une implantation similaire à celle précédemment décrite en figure 1a. La sonde 30 est ainsi représentée sur la figure 2b dans son orientation cible. L'axe X forme avec l'axe horizontal un angle d'environ 25°. Cette implantation correspond à une application privilégiée d'une sonde selon l'invention. Les composants représentés sur les figures 2a, 2b, 3, 4a, 4b et 4c que nous allons maintenant décrire sont adaptés dans leur forme à cette implantation. Il est bien entendu que la présente invention ne se limite pas à cette implantation particulière mais couvre plus généralement toute sonde de mesure aérodynamique destinée à mesurer une incidence locale de flux d'air contre le fuselage d'un aéronef, et quelque soit son implantation sur le fuselage, tant au dessus qu'au dessous de l'axe horizontal. A partir du mode de réalisation donné ici en exemple, l'homme du métier comprendra aisément les adaptations de forme permettant un fonctionnement optimal d'une sonde selon l'invention adaptée à une autre implantation sur le fuselage de l'aéronef.

Le dispositif d'évacuation de liquide d'infiltration 31 de la sonde 30 comprend le capot 25 du support 21 et le disque 23 de l'arbre 20. Le capot 25 et le disque 23 en regard l'un de l'autre au niveau de l'ouverture 26 du capot sont configurés pour former plusieurs chicanes successives autour de l'axe longitudinal. Le capot étant solidaire du support et le disque étant solidaire de l'arbre, l'invention porte d'une manière générale sur une sonde dont l'arbre et le support sont configurés pour former entre eux plusieurs chicanes autour de l'axe longitudinal. Dans le mode de réalisation représenté, le dispositif 31 comprend trois chicanes 32, 33 et 34. Chacune des chicanes est formée par des rainures du capot coopérant avec des rainures du disque. Les chicanes successives sont configurées pour s'opposer à l'infiltration de liquide au travers de l'ouverture 26.

Pour cela, la forme de chaque chicane est configurée de manière à permettre la circulation de liquide au travers de la chicane selon deux chemins. La figure 2a représente un premier chemin 40 par lequel du liquide infiltré par l'ouverture 26 peut circuler au travers de la première chicane 32 vers un circuit d'évacuation 42 aménagé dans le capot 25. La figure 2b représente un second chemin 41 par lequel du liquide infiltré peut circuler au travers la première chicane 32 vers la seconde chicane 33. De manière avantageuse, le premier chemin 40 est fortement favorisé par effet de la gravité. Au contraire, le second chemin 41 qui comporte une portion que le liquide doit remonter, contre l'effet de la gravité, est défavorisé.

Cet effet est encore renforcé par le dimensionnement de chacun des chemins. Avantageusement, la section de passage minimale du premier chemin est supérieure à la section de passage minimale du second chemin. Plus précisément, il est avantageux de configurer d'une part une section de passage minimale du premier chemin dont la plus petite dimension et suffisamment grande pour permettre le transport de gouttes d'eau, et d'autre part une section de passage minimale du second chemin dont la plus petite dimension est suffisamment petite pour empêcher le transport de gouttes d'eau, les infiltrations liquide ayant alors lieu par capillarité ou sous l'effet de la pression résiduel de jet. On sait que le diamètre minimal d'une goutte d'eau est inférieur à 3 mm. On définira donc préférentiellement des sections de passage dont la plus petite dimension et supérieure à 3 mm pour le premier chemin, et inférieure à 3 mm pour le second chemin. Par le dimensionnement des deux chemins, un premier chemin autorisant le transport de gouttes d'eau et un second chemin ne permettant le transport de liquide que par capillarité ou sous l'effet de la pression résiduel du jet d'infiltration, on favorise l'évacuation de liquide infiltré par le premier chemin. Ce dimensionnement renforce l'effet de la gravité qui favorise également le premier chemin.

Ainsi, dans le cas d'infiltration de liquide au travers de l'ouverture 26, une majeure partie du liquide est évacuée par le premier chemin, une plus faible partie est transportée par le second chemin vers une chicane successive. Le dispositif selon l'invention comprend plusieurs chicanes successives autour de l'axe longitudinal. Chaque chicane agit à la façon d'une barrière aux infiltrations ayant pu franchir la barrière précédente. La série de chicanes communicantes ainsi configurée permet d'évacuer majoritairement le liquide par les circuits d'évacuation, loin de l'axe et hors du jet sous pression.

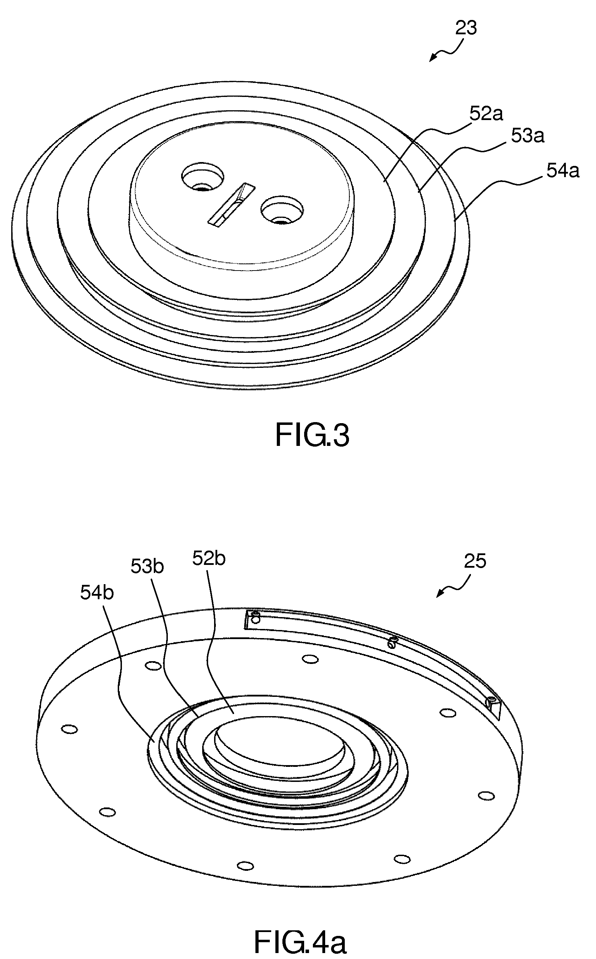

La figure 3 représente le disque 23 en perspective. La face visible est la face supérieure, sur laquelle sont aménagés trois ensembles de rainures circulaires 52a, 53a et 54a, qui coopérant avec des rainures aménagés sur le capot forment les trois chicanes 32, 33 et 34 décrites précédemment.

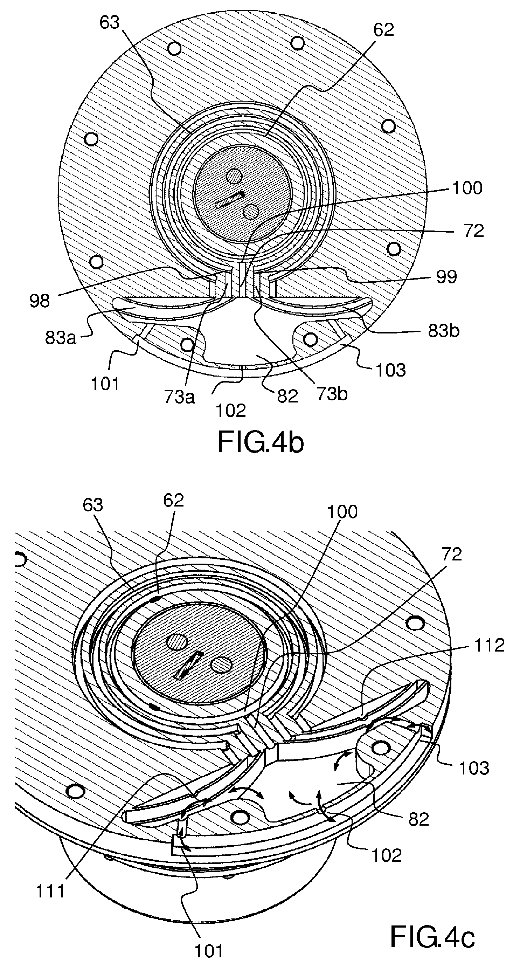

Les figures 4a, 4b et 4c représentent le capot 25 selon plusieurs vues, en coupe et en perspective. La figure 4a représente le capot 25 en perspective. La face visible est la face inférieure, en contact avec le support 21. Le capot 25 comprend trois ensembles de rainures circulaires 52b, 53b et 54b qui, en coopérant avec les rainures 52a, 53a et 53b aménagées sur le disque 23 forment les trois chicanes 32, 33 et 34.

Les figures 4b et 4c représentent le capot 25 dans une vue en coupe. Le plan de coupe de cette vue est représenté sur la figure 2a par le trait d'axe référencé C. A la première chicane 32 est associée une chambre de captation 62 et un circuit d'évacuation comprenant un conduit d'évacuation 72 et une cavité de détente 82. La chambre de captation 62 est constituée d'une rainure circulaire aménagée dans le capot 25, et est ouverte sur la chicane 32. Le conduit d'évacuation 72 aménagée dans le capot 25 relie le point bas 100 de la chambre de captation 62 et la cavité de détente 82 le long d'un rayon du capot. Son implantation correspond au rayon de plus grande pente. La cavité de détente 82 aménagée dans le capot 25 comprend trois orifices de sortie 101, 102 et 103.

Par effet de la gravité, du liquide infiltré dans la première chicane est entrainé par gravité vers la chambre de captation, empêchant la formation de liquide stagnant dans la chicane. Le liquide rejoint alors le point bas de la chambre de captation qui communique avec le conduit d'évacuation. Le liquide est ensuite conduit dans la cavité de détente puis est évacué hors du support au travers des orifices de sortie. Ce parcours correspond au premier chemin possible pour le liquide infiltré dans la chicane.

Selon le même principe, on associe aux deux chicanes suivantes une chambre de captation et un circuit d'évacuation permettant d'évacuer du liquide hors du support par effet de la gravité en s'éloignant de l'arbre. La géométrie des chambres de captation et des circuits d'évacuation des deux chicanes 33 et 34 diffèrent de celle de la première chicane 32. Ainsi, la chambre de captation 63 associée à la chicane 33 est constituée d'une rainure ouverte sur la chicane le long d'une portion d'arc de cercle. Les deux extrémités 98 et 99 de l'arc de cercle constituent deux points bas de la chambre de captation. Le circuit d'évacuation comprend alors deux cavités de détente 83a et 83b reliés aux deux points bas de la chambre de captation par deux conduits d'évacuation 73a et 73b. Les conduits d'évacuation 73a et 73b peuvent s'étendre le long d'un rayon du capot ou parallèlement au conduit 72. Chaque cavité de détente 83a et 83b comprend un orifice de sortie 111 et 112, disposé en un point bas de la cavité de détente, et communiquant avec la cavité de détente 82 de la première chicane.

Lorsque du liquide franchit la première chicane par le second chemin, il est entrainé par effet de la gravité vers la chambre de captation de la seconde chicane. Le liquide rejoint alors l'un des points bas de la chambre et le circuit d'évacuation le conduit hors du support, au travers de l'un des conduits et l'une des cavités de détente.

La chambre de captation et le circuit d'évacuation associée à la troisième chicane est identique à ceux de la seconde chicane et ne sont donc pas décrits en détail. Le mode de réalisation représenté comprend trois chicanes mais l'invention couvre plus largement une sonde comprenant au moins deux chicanes successives. Les modes de réalisation des chambres de captation et des circuits d'évacuation qui ont été décrits peuvent être associés à chacune des chicanes ou à certaines d'entre elles. Avantageusement, la sonde associe à chaque chicane un circuit d'évacuation dédié, qui ne communique pas, à proximité de l'axe, avec le circuit d'évacuation de chicane voisine. Les cavités de détente communiquent entre elles au travers des orifices de sortie, mais cette communication est éloignée de l'axe. Les chemins d'évacuation de liquide sont indépendants pour éviter la communication entre les chemins et les remontées de liquide vers le chemin précédent ou suivant par un chemin plus court présentant moins d'obstacles au liquide sous pression.

Le dispositif selon l'invention est avantageusement configuré pour empêcher les remontées de liquide vers les chicanes dans le cas où la sortie est exposée au jet de liquide sous pression. La cavité de détente 82 associée à la première chicane comprend plusieurs orifices de sortie distants les uns des autres. Cette distance est suffisamment importante pour que, dans le cas où le jet pénètre directement dans un premier orifice, le liquide qui pénètre dans la cavité de détente s'évacue par un second orifice sans accumulation dans la cavité de détente. Ce trajet est représenté par les flèches sur la figure 4c.

Le mode de réalisation représenté sur les figures est adapté à une sonde installée sous le fuselage de l'aéronef de sorte que son axe longitudinal réalise un angle d'environ 30° avec l'horizontal. Pour favoriser le transport par gravité selon le premier chemin, les chicanes sont donc également inclinées d'un angle égal voire inférieur à 30° avec le plan du support comme représenté par l'angle α sur la figure 2b. Lorsqu'une autre implantation de la sonde est recherchée, l'orientation des chicanes est adaptée en fonction de l'orientation de la sonde installée sur l'aéronef. En raison de l'orientation des chicanes, le capot 25 et le disque 23 forment un ensemble imbriqué non démontable. Plusieurs procédés sont envisagés pour la fabrication de cet ensemble. Avantageusement, on mettra en oeuvre un procédé de fabrication additive, par exemple par frittage laser, permettant la fabrication simultanée d'une portion du support, le capot 25, et d'une portion de l'arbre, le disque 23. La fabrication additive simultanée permettant d'obtenir en une étape les deux composants imbriqués formant les chicanes successives. Dans une étape ultérieure, l'ensemble capot et support pourra être monté sur le support et sur l'arbre.

## Revendications

1. Sonde de mesure aérodynamique destinée à mesurer une incidence locale de flux d'air circulant le long du fuselage d'un aéronef, comprenant un support (21, 25) et un arbre (20, 23) mobile en rotation selon un axe longitudinal (X) par rapport au support (21, 25), le support (21, 25) et l'arbre (20, 23) étant configurés pour former entre eux plusieurs chicanes successives (32, 33, 34) autour de l'axe longitudinal (X) ; chaque chicane (32) permettant de transporter du liquide infiltré dans la chicane (32) :
- selon un premier chemin (40), par effet de la gravité, vers un circuit d'évacuation (72, 82) associé à la chicane (32) et aménagé dans le support (21, 25), et
- selon un second chemin (41), et contre l'effet de la gravité, vers une chicane successive (33) ou vers l'arbre (20, 23);
le circuit d'évacuation (72, 82) de chacune des chicanes (32) permettant d'évacuer du liquide hors du support (21, 25) par effet de la gravité en s'éloignant de l'arbre (20, 23).

2. Sonde selon la revendication 1, dont le support (21) comprend une chambre de captation (62), associée à une chicane (32), vers laquelle du liquide infiltré dans la chicane (32) est entrainé par effet de la gravité ; le circuit d'évacuation (72, 82) associé à la chicane (32) communiquant avec au moins un point bas (100) de la chambre de captation (62).

3. Sonde selon la revendication 2, dont la chambre de captation (62) associée à une chicane (32) est constituée d'une rainure circulaire ouverte sur la chicane (32) et communique avec le circuit d'évacuation (72, 82) associé à la chicane (32) en un point bas (100) de la chambre de captation (62).

4. Sonde selon la revendication 2, dont la chambre de captation (63) associée à une chicane (33) est constituée d'une rainure ouverte sur la chicane (33) le long d'une portion d'arc de cercle ; chaque extrémité (98, 99) de la portion d'arc de cercle formant un point bas de la chambre de captation (63) et communiquant avec le circuit d'évacuation (73a, 73b) associé à la chicane (33).

5. Sonde selon l'une des revendications précédentes, dont le circuit d'évacuation (73a, 83a) associée à une chicane (33) comprend au moins une cavité de détente (83a), reliée à la chicane (33) par un conduit d'évacuation (73a), et comprenant un ou plusieurs orifices de sortie (111) aptes à transporter par effet de la gravité du liquide accumulé dans la cavité de détente (83a) vers une cavité de détente (82) associée à une chicane précédente (32) ou hors du support (21, 25).

6. Sonde selon l'une des revendications précédentes, comprenant au moins deux chicanes successives (32, 33) :
- une première chicane (32) à laquelle sont associées une chambre de captation circulaire (62) ouverte sur la première chicane (32), et un circuit d'évacuation (72, 82) comprenant une cavité de détente (82) reliée à la chambre de captation circulaire (62) par un conduit d'évacuation radial (72),
- et au moins une seconde chicane successive (33) à laquelle sont associées une chambre de captation (63) ouverte sur la seconde chicane (33) le long d'une portion d'arc de cercle, et un circuit d'évacuation (73a, 73b, 83a, 83b) comprenant deux cavités de détente (83a, 83b) reliées chacune à une extrémité de la portion d'arc de cercle par un conduit d'évacuation radial (73a, 73b);
la cavité de détente (62) associée à la première chicane (32) comprenant plusieurs orifices de sortie (101, 102, 103) aptes à transporter du liquide accumulé hors du support (21, 25); les cavités de détente (83a, 83b) associées à l'au moins une seconde chicane (33) comprenant chacune un orifice de sortie (111, 112) apte à transporter du liquide accumulé vers la cavité de détente (62) associée à la première chicane (32).

7. Sonde selon la revendication 6, comprenant trois chicanes successives : une première chicane (32) et deux secondes chicanes (33, 34).

8. Sonde selon la revendication 6 ou 7, dont la cavité de détente (82) et les orifices de sortie (101, 102, 103) associés à la première chicane (32) sont configurés de manière à ce que du liquide infiltré au travers d'un premier orifice de sortie (101) est évacué préférentiellement par un second orifice de sortie (102), limitant les remontées de liquide vers la chicane (32).

9. Sonde selon l'une des revendications précédentes, dont pour au moins une chicane (32), la plus petite dimension de la section de passage minimale du premier chemin (40) est supérieure à la plus petite dimension de la section de passage minimale du second chemin (41).

10. Sonde selon la revendication 9, dont la plus petite dimension de la section de passage minimale du premier chemin (40) est suffisamment grande pour permettre le transport de gouttes d'eau.

11. Sonde selon l'une des revendications 9 ou 10, dont la plus petite dimension de la section de passage minimale du premier chemin (40) est supérieure à 3 mm.

12. Sonde selon l'une des revendications 9 à 11, dont la plus petite dimension de la section de passage minimale du second chemin (41) est suffisamment petite pour empêcher le transport de gouttes d'eau et limiter le passage de liquide sous pression.

13. Sonde selon l'une des revendications 8 à 11, dont la plus petite dimension de la section de passage minimale du second chemin (41) est inférieure à 3 mm.

14. Procédé de fabrication d'une sonde selon l'une des revendications précédentes, **caractérisé en ce qu'**il comprend une étape de fabrication additive simultanée d'une partie du support (25) et d'une partie de l'arbre (23) formant ensemble les chicanes successives (32, 33, 34).

## Patentansprüche

1. Aerodynamische Messsonde zum Messen eines lokalen Einfalls von Luftstrom, der entlang dem Rumpf eines Luftfahrzeugs zirkuliert, umfassend einen Träger (21, 25) und eine Welle (20, 23), die entlang einer Längsachse (X) relativ zu dem Träger (21, 25) rotational beweglich ist,
wobei der Träger (21, 25) und die Welle (20, 23) so konfiguriert sind, dass sie dazwischen mehrere aufeinander folgende Prallplatten (32, 33, 34) um die Längsachse (X) bilden, wobei jede Prallplatte (32) den Transport von Flüssigkeit, die in die Prallplatte (32) eingedrungen ist, wie folgt zulässt:
- entlang einem ersten Pfad (40), durch Schwerkraftwirkung, zu einem Ablasskreislauf (72, 82), der mit der Prallplatte (32) assoziiert und innerhalb des Trägers (21, 25) angeordnet ist; und
- entlang einem zweiten Pfad (41), und gegen die Schwerkraftwirkung, zu einer nachfolgenden Prallplatte (33) oder zu der Welle (20, 23);
wobei es der Ablasskreislauf (72, 82) jeder der Prallplatten (32) zulässt, dass Flüssigkeit von dem Träger (21, 25) unter Schwerkraftwirkung durch eine Bewegung weg von der Welle (20, 23) weggeleitet wird.

2. Sonde nach Anspruch 1, wobei der Träger (21) eine Auffangkammer (62) umfasst, die mit einer Prallplatte (32) assoziiert ist, zu der die in die Prallplatte (32) eingedrungene Flüssigkeit unter Schwerkraftwirkung getrieben wird, wobei der mit der Prallplatte (32) assoziierte Ablasskreislauf (72, 82) mit wenigstens einem tiefen Punkt (100) der Auffangkammer (62) in Verbindung ist.

3. Sonde nach Anspruch 2, wobei die mit einer Prallplatte (32) assoziierte Auffangkammer (62) von einer kreisförmigen Nut gebildet wird, die an der Prallplatte (32) offen ist, und mit dem Ablasskreislauf (72, 82) in Verbindung ist, der mit der Prallplatte (32) an einem tiefen Punkt (100) der Auffangkammer (62) assoziiert ist.

4. Sonde nach Anspruch 2, wobei die mit einer Prallplatte (33) assoziierte Auffangkammer (63) von einer Nut gebildet wird, die an der Prallplatte (33) entlang einem Kreisbogenabschnitt offen ist, wobei jedes Ende (98, 99) des Kreisbogenabschnitts einen tiefen Punkt der Auffangkammer (63) bildet und mit dem mit der Prallplatte (33) assoziierten Ablasskreislauf (73a, 73b) in Verbindung ist.

5. Sonde nach einem der vorherigen Ansprüche, wobei der mit einer Prallplatte (33) assoziierte Ablasskreislauf (73a, 83a) wenigstens einen Druckentlastungshohlraum (83a), der mit der Prallplatte (33) durch einen Ablasskreislauf (73a) verbunden ist, und ein oder mehrere Austrittslöcher (111) umfasst, die die in dem Druckentlastungshohlraum (83a) angesammelte Flüssigkeit unter Schwerkraftwirkung zu einem mit einer vorherigen Prallplatte (32) assoziierten Druckentlastungshohlraum (82) oder außerhalb des Trägers (21, 25) transportieren können.

6. Sonde nach einem der vorherigen Ansprüche, die wenigstens zwei aufeinander folgende Prallplatten (32, 33) umfasst:
- eine erste Prallplatte (32), mit der eine kreisförmige Auffangkammer (62) assoziiert ist, die auf der ersten Prallplatte (32) offen ist, und einen Ablasskreislauf (72, 82), der einen Druckentlastungshohlraum (82) umfasst, der über einen radialen Ablasskreislauf (72) mit der kreisförmigen Auffangkammer (62) verbunden ist; und
- wenigstens eine zweite nachfolgende Prallplatte (33), mit der eine auf der zweiten Prallplatte (33) entlang einem Kreisbogenabschnitt offene Auffangkammer (63) und ein zwei Druckentlastungshohlräume (83a, 83b) umfassender Ablasskreislauf (73a, 73b, 83a, 83b) assoziiert sind, die jeweils mit einem Ende des Kreisbogenabschnitts über einen radialen Ablasskreislauf (73a, 73b) verbunden sind,
wobei der mit der ersten Prallplatte (32) assoziierte Druckentlastungshohlraum (62) mehrere Austrittslöcher (101, 102, 103) umfasst, die aufgefangene Flüssigkeit außerhalb des Trägers (21, 25) transportieren können, wobei die mit der wenigstens einen zweiten Prallplatte (33) assoziierten Druckentlastungshohlräume (83a, 83b) jeweils ein Austrittsloch (111, 112) umfassen, das akkumulierte Flüssigkeit zu dem mit der ersten Prallplatte (32) assoziierten Druckentlastungshohlraum (62) transportieren kann.

7. Sonde nach Anspruch 6, die drei aufeinander folgende Prallplatten umfasst: eine erste Prallplatte (32) und zwei zweite Prallplatten (33, 34).

8. Sonde nach Anspruch 6 oder 7, wobei der Druckentlastungshohlraum (82) und die mit der ersten Prallplatte (32) assoziierten Austrittslöcher (101, 102, 103) so konfiguriert sind, dass durch ein erstes Austrittsloch (101) gedrungene Flüssigkeit vorzugsweise über ein zweites Austrittsloch (102) abgelassen wird, wodurch Flüssigkeitsrückfluss in Richtung der Prallplatte (32) begrenzt wird.

9. Sonde nach einem der vorherigen Ansprüche, wobei für wenigstens eine Prallplatte (32) die kleinste Abmessung des minimalen Passagequerschnitts des ersten Pfades (40) größer ist als die kleinste Abmessung des minimalen Passagequerschnitts des zweiten Pfades (41).

10. Sonde nach Anspruch 9, wobei die kleinste Abmessung des minimalen Passagequerschnitts des ersten Pfades (40) groß genug ist, um Wassertropfen zu transportieren.

11. Sonde nach Anspruch 9 oder 10, wobei die kleinste Abmessung des minimalen Passagequerschnitts des ersten Pfades (40) größer ist als 3 mm.

12. Sonde nach einem der Ansprüche 9 bis 11, wobei die kleinste Abmessung des minimalen Passagequerschnitts des zweiten Pfades (41) klein genug ist, um zu verhindern, dass Wassertropfen transportiert werden, und um die Passage von unter Druck stehender Flüssigkeit zu begrenzen.

13. Sonde nach einem der Ansprüche 8 bis 11, wobei die kleinste Abmessung des minimalen Passagequerschnitts des zweiten Pfades (41) kleiner als 3 mm ist.

14. Verfahren zur Herstellung einer Sonde nach einem der vorherigen Ansprüche, **dadurch gekennzeichnet, dass** es einen Schritt der gleichzeitigen additiven Herstellung eines Teils des Trägers (25) und eines Teils der Welle (23) beinhaltet, die zusammen die aufeinander folgenden Prallplatten (32, 33, 34) bilden.

## Claims

1. An aerodynamic measurement probe intended to measure a local incidence of air flow circulating along the fuselage of an aircraft, comprising a support (21, 25) and a shaft (20, 23) rotationally movable along a longitudinal axis (X) relative to said support (21, 25);
said support (21, 25) and said shaft (20, 23) being configured so as to form a plurality of successive baffles (32, 33, 34) in between about said longitudinal axis (X), each baffle (32) allowing liquid that has penetrated said baffle (32) to be carried:
- along a first path (40), under the effect of gravity, towards a drainage circuit (72, 82) associated with said baffle (32) and arranged inside said support (21, 25); and
- along a second path (41), and against the effect of gravity, towards a successive baffle (33) or towards said shaft (20, 23);
the drainage circuit (72, 82) of each of said baffles (32) allowing liquid to be drained away from said support (21, 25) under the effect of gravity by moving away from said shaft (20, 23).

2. The probe according to claim 1, wherein said support (21) comprises a collection chamber (62), associated with a baffle (32), towards which the liquid that has penetrated said baffle (32) is driven under the effect of gravity, the drainage circuit (72, 82) that is associated with said baffle (32) communicating with at least one low point (100) of said collection chamber (62).

3. The probe according to claim 2, wherein said collection chamber (62) that is associated with a baffle (32) is made up of a circular groove that is open on said baffle (32) and communicates with said drainage circuit (72, 82) that is associated with said baffle (32) at a low point (100) of said collection chamber (62).

4. The probe according to claim 2, wherein said collection chamber (63) that is associated with a baffle (33) is made up of a groove that is open on said baffle (33) along a portion of an arc of a circle, each end (98, 99) of said portion of the arc of a circle forming a low point of said collection chamber (63) and communicating with the drainage circuit (73a, 73b) that is associated with said baffle (33).

5. The probe according to any one of the preceding claims, wherein the drainage circuit (73a, 83a) that is associated with a baffle (33) comprises at least one pressure relief cavity (83a), which is connected to said baffle (33) via a drainage conduit (73a), and comprises one or more exit holes (111) that are designed to carry the liquid collected in said pressure relief cavity (83a) under the effect of gravity towards a pressure relief cavity (82) that is associated with an upstream baffle (32) or to carry the liquid outside of said support (21, 25).

6. The probe according to any one of the preceding claims, comprising at least two successive baffles (32, 33):
- a first baffle (32), with which are associated a circular collection chamber (62) that is open on said first baffle (32) and a drainage circuit (72, 82) comprising a pressure relief cavity (82) connected to said circular collection chamber (62) via a radial drainage conduit (72); and
- at least one second successive baffle (33), with which are associated a collection chamber (63) that is open on said second baffle (33) along a portion of an arc of a circle and a drainage circuit (73a, 73b, 83a, 83b) comprising two pressure relief cavities (83a, 83b) each connected to an end of said portion of an arc of a circle via a radial drainage conduit (73a, 73b),
said pressure relief cavity (62) that is associated with said first baffle (32) comprising a plurality of exit holes (101, 102, 103) that are designed to carry the collected liquid outside of said support (21, 25), said pressure relief cavities (83a, 83b) that are associated with the at least one second baffle (33) each comprising an exit hole (111, 112) that is designed to carry the accumulated liquid towards said pressure relief cavity (62) that is associated with said first baffle (32).

7. The probe according to claim 6, comprising three successive baffles: a first baffle (32) and two second baffles (33, 34).

8. The probe according to claim 6 or 7, wherein said pressure relief cavity (82) and said exit holes (101, 102, 103) that are associated with said first baffle (32) are configured so that the liquid that has penetrated through a first exit hole (101) is preferably drained via a second exit hole (102), limiting any backflows of liquid towards said baffle (32).

9. The probe according to any one of the preceding claims, wherein, for at least one baffle (32), the smallest dimension of the minimum passage section of said first path (40) is greater than the smallest dimension of the minimum passage section of said second path (41).

10. The probe according to claim 9, wherein the smallest dimension of the minimum passage section of said first path (40) is big enough to allow water droplets to be carried.

11. The probe according to any one of claims 9 or 10, wherein the smallest dimension of the minimum passage section of said first path (40) is greater than 3 mm.

12. The probe according to any one of claims 9 to 11, wherein the smallest dimension of the minimum passage section of said second path (41) is small enough to prevent water droplets being carried and to limit the passage of pressurised liquid.

13. The probe according to any one of claims 8 to 11, wherein the smallest dimension of the minimum passage section of said second path (41) is lower than 3 mm.

14. A method for manufacturing a probe according to any one of the preceding claims, **characterised in that** it comprises a step of simultaneous additive manufacturing of part of said support (25) and part of said shaft (23) that together form said successive baffles (32, 33, 34).
